# EUROPEAN PATENT SPECIFICATION

(11) **EP 1 413 414 B1**
(45) Date of publication and mention of the grant of the patent: **13.12.2006**
(21) Application number: 04075031.7
(22) Date of filing: 09.06.1999
(51) Int. Cl.: B29B 13/08, B29B 9/16, B29C 35/08, A61F 2/38, A61L 27/00

(54) **Method for forming cross-linked molded plastic bearings**
Verfahren zur Herstellung vernetzter geformter Kunststofflager
Procédé de préparation de paliers moulés en plastique réticulé

(30) Priority: 10.06.1998 US 88729 P
(43) Date of publication of application: 28.04.2004
(62) Divisional of application: 99304482.5
(73) Proprietor: DePuy Products, Inc., Warsaw, Indiana 46581 (US)
(72) Inventor: McNulty, Donald E., Warsaw Indiana 46580 (US); Smith, Todd, Fort Wayne Indiana 46804 (US)
(74) Representative: Fisher, Adrian John

(56) References cited:
- EP-A- 1 072 275
- EP-A- 1 129 731
- EP-A- 1 332 733
- EP-A- 1 332 735
- WO-A-97/29793
- WO-A-98/16258
- US-A- 5 728 748
- US-A- 5 879 400

## Description

### Background of the Invention

The present invention relates to improved bearings for use in orthopaedic implant prosthesis and particularly to methods for making cross-linked molded ultra high molecular weight polyethylene (UHMWPE) bearings and bearing material.

Such UHMWPE resin is commonly used for bearings in hip, knee, shoulder and elbow prosthesis. Typically, the bearings may be formed by direct compression molding processes or by machining the required bearing shapes from mill shapes such as sheet or bar stock material. Typically, the stock material or the molded bearings are irradiated and subsequently heat treated or heat annealed. The irradiation generates molecular cross-links and free radicals. The free radicals are subsequently eliminated by the heat treating processes.

Reference is made to a number of prior art references as follows:

### U.S. Patents:

1. U.S. Patent No. 5,414, 049, Non-Oxidizing Polymeric Medical Implant, to Deh-Chuan Sun, et al..
2. U.S. Patent No. 5,449, 745, Non-Oxidizing Polymeric Medical Implant, to Deh-Chuan Sun, et al..
3. U.S. Patent No. 5,543,471, Non-Oxidizing Polymeric Medical Implant, to Deh-Chuan Sun, et al..
4. U.S. Patent No. 5,650,485, Non-Oxidizing Polymeric Medical Implant, to Deh-Chuan Sun, et al..
5. U.S. Patent No. 5,728,748, Non-Oxidizing Polymeric Medical Implant, to Deh-Chuan Sun, et al..
6. U.S. Patent No. 4,586,995, Polymer and Irradiation Treatment Method, to James C. Randall.
7. U.S. Patent No. 5,153,039, High Density Polyethylene Article with Oxygen Barrier Properties, to Jay P. Porter, et al..
8. U.S. Patent No. 5,508,319, High Melt Strength, Ethylene Polymer, Process for Making It, and Use Thereof, to Anthony J. DeNicola, Jr. et al..
9. U.S. Patent No. 3,352,818, Stability of Polyolefines, to Gerhard Meyer, et al..
10. U.S. Patent No. 5,577,368, Method for Improving Wear Resistance of Polymeric Bioimplantable Components, to John V. Hamilton, et al..
11. U.S. Patent No. 5,753,182, Method for Reducing the Number of Free Radicals Present in Ultrahigh Molecular Weight Polyethylene Orthopedic Components, to Joel Higgins.
12. U.S. Patent No. 5,709,020, Method for Reducing the Generation of Wear Particulates From an Implant, to David A. Pienowski, et al..
13. U.S. Patent No. 5,702,456, Implant Having Reduced Generation of Wear Particulates, to David A. Pienowski.
14. U.S. Patent No. 5,515,590, Method for Reducing the Generation of Wear Particulates From an Implant, David A. Pienowski.
15. U.S. Patent No. 5,593,719, Treatments to Reduce Frictional Wear Between Components Made of Ultra-High Molecular Weight Polyethylene and Metal Alloys, Geoffrey Dearnaley, et al.
16. U.S. Patent No. 4,366,618, Bone Connective Prosthesis Adapted to Maximize Strength and Durability of Prostheses - Bone Cement Interface; and Methods of Forming Same, to Simon Raab.
17. U.S. Patent No. 5,014,494, Method of Sterilizing Medical Articles, to Robert D. George.
18. U.S. Patent No. 5,137,688, Irradiated Articles Molded From Polycarbonate - Polyamide Blends, to James L. DeRudder.
19. U.S. Application No. 08/911,792, (now published as US 6, 017, 925) Process for Medical Implant of Cross-linked Ultrahigh Molecular Weight Polyethylene Having Improved Balance of Wear Properties and Oxidation, filed August 15, 1997, to Kenneth Ashley Saum, et al.
20. U.S. Patent No. 5, 879, 400, Melt-Irradiated ultra High Molecular Weight Polyethylene Prosthetic Devices, to Edward W. Merril, et al..

### Other Patents

21. E.P. Patent No. 0722973 A1, Chemically Crosslinked Ultrahigh. Molecular Weight Polyethylene for Artificial Human Joints, to Ron Salovey, et al..
22. W.O. Patent No. 97/29793, Radiation and Melt Treated Ultra High Molecular Weight Polyethylene Prosthetic Devices, to W. Merrill, et al..
23. W.O. Patent No. 98/01085, Crosslinking of Polyethylene for Low Wear Using Radiation and Thermal Treatments, to Fu-Wen Shen, et al..
24. W.O Patent No. 98/16258, Wear Resistant Surface-Gradient Cross-Linked Polyethylene, to Harry A. Mc Kellop et al..

The above references teach the general concepts involved in forming UHMWPE resin directly into a part or a stock form from which the part is made, gamma or other irradiation of the part or the stock form and subsequent heat treating (annealing or remelting) of the part or stock form. The disclosures of these above-listed references establish the nature of UHMWPE resin, the irradiation steps and options and the heat treating steps and options.

### Summary of the Invention

The present invention is directed to a method, as set forth in the accompanying claim 1, for irradiating the UHMWPE resin when it is in powder form, which produces cross linking of the molecular chains as well as free radicals. The free radicals generated from the gamma irradiation are quenched by the subsequent molding process. An alternative method is set forth in the accompanying claim 3.

While the prior art teaches irradiating formed bearing parts or stock from which bearings are made, the present invention involves irradiation of the UHMWPE resin powder, preferably by gamma or electron beam irradiation. This ionizing irradiation will generate molecular cross-links and free radicals as is well documented. These free radicals will be dealt with in the present invention by the molding process which involves temperatures above the melting point of the polymer.

The present invention is designed to reduce the amount of wear debris generated from UHMWPE bearings. Such wear debris has been associated with bone and soft tissue deterioration leading to implant loosening, which may necessitate even revision surgery. The present invention is also to improve the wear resistance of UHMWPE bearings.

Additional features of the present invention will become apparent to those skilled in the art upon consideration of the following detailed description of preferred embodiments exemplifying the best mode of carrying out the invention as presently perceived.

### Description of the Preferred Embodiment(s)

The present invention involves producing a cross-linked bearing component by cross-linking the UHMWPE resin powder and then using the thermal energy of the molding process to promote further cross-linking by free-radical quenching. The process of the present invention may be used to mold net-shape bearings directly to provide a finish which is satisfactory for an articular (bearing) surface. (The term "net-shape" is intended to define a shape that is the final shape of the bearing to be used in the implant. "Near net-shape" requires some degree of machining to produce the final bearing.) It is believed that smoother bearing surfaces can be made by molding processes than by machining processes.

The irradiation process may preferably be performed under vacuum, in an inert atmosphere to eliminate oxygen, or in an oxygen reduced atmosphere. Oxygen present when irradiating has been shown to cause subsequent reduction in mechanical properties for UHMWPE. A premolding vacuum phase is also contemplated by the present invention to enhance removal or reduction of any unwanted oxygen from the UHMWPE resin powder. For example, the irradiated powder resin may be cold pressed into the desired shape and then left under vacuum before heat is applied.

The molding process, which may also preferably be performed under vacuum, may involve pressures from 69 to 4828 bar (1,000 to 70,000 psi) and set point temperatures of 121° to 260°C (250° to 500° Fahrenheit). The resulting work piece is either the actual desired bearing configuration or blank that can be machined subsequently to produce the desired bearing geometry.

It will be appreciated, however, that acceptable results may be achieved when either or both the irradiation process and the molding process are carried out under atmospheric conditions, i.e., with some oxygen present. This may well be the case for certain bearing configurations.

One embodiment of the present invention relates to a method for producing a medical implant or stock from which an implant can be made from olefinic material such as UHMWPE comprising the steps of placing olefinic resin in a sealed container, preferably evacuating or displacing air from the container to produce a low oxygen or oxygen free atmosphere, subjecting the resin container to irradiation, preferably gamma or electron beam irradiation, at a dose level between 20 and 500 kGy (2 and 50 Mrads) to create cross-links and free radicals within the polymer resin, preferably maintaining an inert atmosphere, and subjecting the free radical containing powder to a molding operation which preferably takes place in a vacuum or in the inert atmosphere. The irradiated resin may preferably be transferred from the sealed container to the molding equipment in a vacuum or in an inert atmosphere environment or may be exposed to air for a short time during the transfer.

The molding operation may comprise the steps of raising the powder resin within the mold to a temperature at or above the melting point of the resin. The purpose of this is to produce a consolidated net-shape or near net-shape implant or raw material (bar, sheet or puck stock) while simultaneously quenching the free radicals to promote further cross-linking between molecules of the polymer.

The sealed container may be flushed with inert gas (nitrogen, argon, helium, neon, or any combination thereof) and evacuated several times to further reduce the residual oxygen content. Instead of a vacuum, the atmosphere of the sealed container prior to gamma irradiation and storage may also be an inert gas consisting of nitrogen, argon, helium, neon, or any combination thereof.

A more complete understanding of the present invention can be obtained by referring to the following illustrative examples of the practice of the invention.

### EXAMPLE 1

A polymer resin is acquired in powder form, which is often referred to as "flake" in the industry. This resin powder is placed in pouches which are formed from a breathable plastic membrane. It is common to use such Tyvek™ pouches to package medical products for sterilization. A plurality of such pouches are placed in a vacuum container, i.e., a container which can be closed and in which a vacuum can be formed. This container may be pumped for a period of time sufficient to remove the oxygen, at least to the extent discussed in the prior art references. In some cases, it may be advisable to pull what is referred to as a "high vacuum" condition within the sealed container to make sure the resin powder is oxygen free. It will be appreciated that the process of pumping the vacuum in the container may be a process in which, after a vacuum is initially pulled on the container, the container may be filled with an inert gas, and then the inert gas may be pumped from the container. This flushing process may take place two or more times to acquire the desired oxygen free condition.

The container is sealed and left under a vacuum and irradiated using standard irradiation techniques through the walls of the metal container. While the irradiation may be from 20 to 500 kGy (2 to 50 Mrads) or even 20 to 1000 kGy (2 to 100 Mrads), it is generally believed that irradiation from 20 to 200 KGy (2 to 20 Mrads) is sufficient. The container is removed from the irradiation station and a two day post-irradiation pump down was conducted to remove residual hydrogen. The container was then brought to the molding area which may comprise one or more molding presses. It may be advisable to transfer the pouches from the container to the molding presses using a system which will keep the pouches and the powder therein from being exposed to oxygen. It is believed to be preferable to do the actual molding in mold equipment which is capable of being under a vacuum. Alternatively, a short time exposure of the irradiated resin to air may be inconsequential. Essentially, the resin powder is transferred from the pouches into the molding equipment and molded under a vacuum or inert gas (oxygen free environment). The molding operation is rather conventional in that it applies temperatures greater than the melting point of the resin and pressures to form the desired molded material which may be a net-shape bearing, a near net-shape bearing or stock from which a bearing may be fabricated.

The method of the present invention, therefore, contemplates irradiation of resin powder and molding (remelting) of the resin powder under sufficient heat and pressure to form the powder into a desired solid plastic shape. The irradiation and the molding may take place in atmosphere or in a vacuum or in an inert atmosphere. In this specification and in the claims, a vacuum, partial vacuum or inert atmosphere may collectively be referred to as an "oxygen reduced atmosphere." The molding may take place in conventional molding equipment in atmosphere or in oxygen reduced atmosphere. The plastic may be an olefinic resin such as UHMWPE or any plastic which is cross-linked by irradiation and the free radicals of which are eliminated by heat treating such as by remelting for molding.

### EXAMPLE 2

A UHMWPE polymer resin (GUR 1050 from Ticona) was acquired in powder form. This resin powder was placed in a pouch and positioned in a vacuum container, which was closed. The container was placed under a vacuum for a period of time sufficient to substantially remove the oxygen from the resin powder. The container was left under a vacuum and irradiated at about 50 to about 100 kGy (5 to about 10 Mrads) using standard irradiation techniques.

The polymer resin was then removed from the container and subjected to a two day post-irradiation pump down to remove residual hydrogen from the polymer resin. The polymer resin was then transferred to compression molding equipment. The polymer resin was again placed under a vacuum to substantially remove the oxygen from the resin powder and molded in an oxygen free environment. About 103.5 bar (1500 pounds per square inch) of pressure was applied to the resin power at a temperature of about 204°C (400°F) for 60 minutes. The polymer resin was allowed to cool to room temperature and removed from the molding equipment.

It is thought that the method for forming a plastic prosthesis bearing, net-shape bearing, near net-shape bearing or plastic stock from which such a bearing can be formed by the present invention and many of its attendant advantages will be understood from the foregoing description and it will be apparent that various changes may be made without departing from the scope of the invention as defined by the following claims or sacrificing all of its material advantages, the form hereinbefore described being merely a preferred or exemplary embodiment thereof.

## Claims

1. A method of manufacturing an articular bearing surface for use in an orthopaedic implant comprising the steps of:
providing a supply of ultra-high molecular weight polyethylene powder;
irradiating said powder with radiation energy to cross-link said ultra-high molecular weight polyethylene; and
forming said irradiated powder into the articular bearing surface, comprising the sub-steps of:
placing said irradiated powder into a mold;
pressing said irradiated powder within said mold; and
heating said powder within said mold.

2. The method of claim 1, wherein said forming step further comprises a sub-step of subsequently machining the articular bearing geometry after removal thereof from the mold.

3. A method of manufacturing an articular bearing surface for use in an orthopaedic implant comprising the steps of:
providing a supply of ultra-high molecular weight polyethylene powder;
irradiating said powder with radiation energy to cross-link said ultra-high molecular weight polyethylene;
forming said irradiated powder into a blank, comprising the sub-steps of:
placing said irradiated powder into a mold;
pressing said irradiated powder within said mold; and
heating said powder within said mold; and
subsequently machining the blank to produce the articular bearing geometry.

4. The method of claim 1, 2 or 3, wherein said mold is heated above the melting point of said ultra-high molecular weight polyethylene.

5. The method of claim 1, 2 or 3, wherein said mold comprises a compression mold.

6. The method of claim 1 or claim 3, wherein said powder comprises flake.

7. The method of claim 1 or claim 3, wherein said supply of powder comprises pouches and said irradiating step comprises irradiating said powder within said pouches.

8. The method of claim 1 or claim 3 comprising the further step of reducing an amount of oxygen in an atmosphere around said powder for said irradiating step.

9. The method of claim 8, wherein said step of reducing the amount of oxygen comprises flushing said powder with an inert gas.

10. The method of claim 1 or claim 3, wherein said radiation energy consists of one of gamma rays and electron particle beam.

11. The method of claim 1 or claim 3, wherein said articular bearing surface is configured for use with a knee implant.

## Patentansprüche

1. Verfahren zur Herstellung einer Gelenklagerfläche zur Verwendung in einem orthopädischen Implantat, umfassend die Schritte:
Bereitstellen einer Menge von Pulver aus Polyethylen mit ultrahohem Molekulargewicht,
Bestrahlen des Pulvers mit Strahlungsenergie zum Vernetzen des Polyethylens mit ultrahohem Molekulargewicht, und
Formen des bestrahlten Pulvers zu der Gelenklagerfläche, umfassend die Unterschritte:
Plazieren des bestrahlten Pulvers in einer Form,
Pressen des bestrahlten Pulvers in der Form, und
Erwärmen des Pulvers in der Form.

2. Verfahren nach Anspruch 1, **dadurch gekennzeichnet, daß** der Formschritt ferner einen Unterschritt der nachfolgenden Bearbeitung der Gelenklagergeometrie nach Herausnahme derselben aus der Form umfaßt.

3. Verfahren zur Herstellung einer Gelenklagerfläche zur Verwendung in einem orthopädischen Implantat, umfassend die Schritte:
Bereitstellen einer Menge von Pulver aus Polyethylen mit ultrahohem Molekulargewicht,
Bestrahlen des Pulvers mit Strahlungsenergie zum Vernetzen des Polyethylens mit ultrahohem Molekulargewicht,
Formen des bestrahlten Pulvers zu einem Rohling, umfassend die Unterschritte:
Plazieren des bestrahlten Pulvers in einer Form,
Pressen des bestrahlten Pulvers in der Form, und
Erwärmen des Pulvers in der Form, und
nachfolgende Bearbeitung des Rohlings zur Erzeugung der Gelenklagergeometrie.

4. Verfahren nach Anspruch 1, 2 oder 3, **dadurch gekennzeichnet, daß** die Form über dem Schmelzpunkt des Polyethylens mit ultrahohem Molekulargewicht erwärmt wird.

5. Verfahren nach Anspruch 1, 2 oder 3, **dadurch gekennzeichnet, daß** die Form eine Preßform umfaßt.

6. Verfahren nach Anspruch 1 oder Anspruch 3, **dadurch gekennzeichnet, daß** das Pulver Flocken umfaßt.

7. Verfahren nach Anspruch oder Anspruch 3, **dadurch gekennzeichnet, daß** die Menge von Pulver Beutel umfaßt und der Bestrahlungsschritt Bestrahlen des Pulvers in den Beuteln umfaßt.

8. Verfahren nach Anspruch 1 oder Anspruch 3, **dadurch gekennzeichnet, daß** es einen weiteren Schritt des Reduzierens einer Sauerstoffmenge in einer Atmosphäre um das Pulver für den Bestrahlungsschritt umfaßt.

9. Verfahren nach Anspruch 8, **dadurch gekennzeichnet, daß** der Schritt des Reduzierens der Sauerstoffmenge Spülen des Pulvers mit einem inerten Gas umfaßt.

10. Verfahren nach Anspruch 1 oder Anspruch 3, **dadurch gekennzeichnet, daß** die Strahlungsenergie aus einem von Gammastrahlen und Elektronenpartikelstrahl besteht.

11. Verfahren nach Anspruch 1 oder Anspruch 3, **dadurch gekennzeichnet, daß** die Gelenklagerfläche zur Verwendung mit einem Knieimplantat konfiguriert ist.

## Revendications

1. Procédé de fabrication d'une surface de palier articulaire pour une utilisation dans un implant orthopédique comprenant les étapes consistant à :
fournir une alimentation en poudre de polyéthylène de poids moléculaire extrêmement élevé ;
irradier ladite poudre avec une énergie de rayonnement afin de réticuler ledit polyéthylène de poids moléculaire extrêmement élevé ; et
donner à ladite poudre irradiée la forme de la surface de palier articulaire, comprenant les sous-étapes consistant à :
placer ladite poudre irradiée dans un moule ;
presser ladite poudre irradiée à l'intérieur dudit moule ; et
chauffer ladite poudre à l'intérieur dudit moule.

2. Procédé selon la revendication 1, dans lequel ladite étape de formage comprend en outre une sous-étape consistant à usiner par la suite la géométrie du palier articulaire après le retrait de celui-ci du moule.

3. Procédé de fabrication d'une surface de palier articulaire pour une utilisation dans un implant orthopédique comprenant les étapes consistant à :
fournir une alimentation en poudre de polyéthylène de poids moléculaire extrêmement élevé ;
irradier ladite poudre avec une énergie de rayonnement afin de réticuler ledit polyéthylène de poids moléculaire extrêmement élevé ; et
donner à ladite poudre irradiée la forme d'une ébauche, comprenant les sous-étapes consistant à :
placer ladite poudre irradiée dans un moule ;
presser ladite poudre irradiée à l'intérieur dudit moule ; et
chauffer ladite poudre à l'intérieur dudit moule; et
par la suite usiner l'ébauche afin de produire la géométrie du palier articulaire.

4. Procédé selon la revendication 1, 2 ou 3, dans lequel ledit moule est chauffé au-dessus du point de fusion dudit polyéthylène de poids moléculaire extrêmement élevé.

5. Procédé selon la revendication 1, 2 ou 3, dans lequel ledit moule comprend un moule à compression.

6. Procédé selon la revendication 1 ou 3, dans lequel ladite poudre comprend une paillette.

7. Procédé selon la revendication 1 ou 3, dans lequel ladite alimentation en poudre comprend des poches et ladite étape d'irradiation comprend l'irradiation de ladite poudre à l'intérieur desdites poches.

8. Procédé selon la revendication 1 ou la revendication 3 comprenant l'étape supplémentaire consistant à réduire une quantité d'oxygène dans une atmosphère autour de ladite poudre pour ladite étape d'irradiation.

9. Procédé selon la revendication 8, dans lequel ladite étape de réduction de la quantité d'oxygène comprend le rinçage de ladite poudre avec un gaz inerte.

10. Procédé selon la revendication 1 ou la revendication 3, dans lequel ladite énergie de rayonnement consiste en un parmi des rayons gamma et un faisceau de particules électroniques.

11. Procédé selon la revendication 1 ou la revendication 3, dans lequel ladite surface de palier articulaire est configurée pour une utilisation avec un implant du genou.
